# EUROPEAN PATENT APPLICATION

(11) **EP 2 474 447 A1**
(43) Date of publication of application: **11.07.2012**
(21) Application number: 11000092.4
(22) Date of filing: 07.01.2011
(51) Int. Cl.: B60Q 1/44

(54) **Safety signaling device for motor vehicles**

(71) Applicant: Rizoma S.r.l., 21010 Ferno (VA) (IT)
(72) Inventor: The designation of the inventor has not yet been filed
(74) Representative: Botti, Mario

(57) **Abstract**

The present invention concerns a safety signalling device (1) for a motor vehicle (3) provided with an electric system connected to a power supply battery and with an actuation control (14) of the stop lights slaved to a pedal (18) of the brake of the vehicle; such a device (1) comprises:
- at least one signalling light source (2);
- an electric circuit (10) for supplying power and connecting between the light source (2) and a voltage reference (11, 13) of the electric system of the vehicle (3);
- an electric connection (17) between the actuation control (14) of the stop lights and a terminal (23) with alternating voltage reference to activate the intermittent actuation of the light source/s (2) in conjunction with pressure on the brake pedal (18).

## Description

### Field of application

The present invention concerns a safety signalling device installed on board of a motor vehicle provided with an actuation control of the stop lights slaved to a pedal of the brake of the vehicle.

More in particular, the invention concerns a signalling device intended to be activated in an automatic manner while the vehicle is being driven without the driver having the burden of modifying his own driving behaviour; the following description is given with specific reference to the field of motor vehicles with the purpose of simplifying its presentation.

### Prior art

The "Associazione Sostenitori Amici Polizia Stradale" (*Friends of the Traffic Police Support Association*) (Ansaps) has recently made an appeal concerning the safety of pedestrians since the statistics of the last ten years show horrifying data concerning around two hundred thousand people run over on Italian roads.

These statistics are even more dramatic since, whereas the death rate on the roads is decreasing by 7.8% (data of year 2007), the death rate amongst pedestrians is paradoxically increasing (3.3%).

Other significant data shows that 35% of pedestrians are run over on pedestrian crossings, and this data represents 25% of all pedestrians who have lost their lives.

It is therefore highly desirable to be able to make pedestrian crossings safer through better vertical and horizontal road signs.

However, there should also be new initiatives and new and more innovative signalling and lighting instruments that can in some way make it easier for the driver to see the pedestrian and *vice versa.*

Indeed, especially in low visibility conditions, like for example at night or in fog or in bad weather conditions, it is of vital importance for the driver to even only be aware of the presence of a pedestrian on the side of the road, but also for the pedestrian to be aware of an oncoming vehicle.

Some motor vehicle manufacturers are working on research projects to try and avoid these problems. For example, BMW is working on a targeted project called "AMULETT" in which a system called Car-2-X is being developed which helps the driver to identify a pedestrian through an exchange of RFID data. More in particular, this system is able to detect the presence of a pedestrian by means of body heat and through a radio transponder.

Basically, through pulses (for example by exploiting infrared beams), the transponder sends a message identifying a possibly vulnerable pedestrian or cyclist to the driver. The system operates even if the pedestrian is not in the field of view of the driver of the vehicle, for example if he is hidden by a parked car or by another obstacle.

Although it is advantageous under many aspects, this system is rather complicated, costly and difficult to incorporate into or extend to all vehicles already in circulation with relatively low costs.

VOLVO is also studying a system for the safety of the pedestrians called "Pedestrian Detection". This device exploits a video camera for detecting pedestrians and it is always operating until the speed of 80 km/h is reached, warning distracted drivers of the presence of a pedestrian in front of the car.

If the driver does not react, the device brakes to the maximum extent of the system, stopping the vehicle before running over the unfortunate only if the speed is below 35 km/h. In all other cases, i.e. with speeds greater than 35km/h, the braking action is carried out in any case reducing the speed of the vehicle and thus allowing the pedestrian to either run to safety or greatly reduce the injuries suffered in the case in which he is run over.

This solution still requires fine tuning that can make it reliable and possible to install on all the motor vehicles of the Swedish manufacturer.

The technical problem forming the basis of the present invention is that of providing a safety signalling device that can be installed on board of a vehicle and that can be intended for an automatic activation while the vehicle is being driven.

Another purpose of the invention is that of providing the vehicle with a signalling device that represents an aid to allow the pedestrians to be aware of the behaviour of the driver of the oncoming vehicle.

A further purpose of the invention is that of providing a safety signalling device that can be easily installed with low costs on both all new vehicle models, and on models part of the range of vehicles already in circulation.

### Summary of the invention

The idea for the solution forming the basis of the present invention is based upon the assumption that information arriving from a visual element immediately hits the imagination of an individual and makes it possible to perceive a situation of safety or of possible danger in real time, just like the green light of a traffic light and the flashing light of a direction indicator.

Based upon such an idea for a solution, the technical problem is solved by a safety signalling device for a motor vehicle provided with an electric system connected to a power supply battery and with an actuation control of the stop lights slaved to a pedal of the brake of the vehicle, characterised in that it comprises:
- at least one signalling light source;
- an electric circuit for the power supply and the connection between said at least one light source and a voltage reference of the electric system of said vehicle;
- an electric connection between said actuation control of the stop lights and a terminal with alternating voltage reference to activate the intermittent actuation of said at least one light source in conjunction with a pressure on the brake pedal.

Advantageously, the signalling device of the present invention can also comprise a switch inserted on said electric connection; such a switch being in turn slaved to a pressure on the brake pedal.

A fuse is also foreseen between said relay and a voltage reference.

It should also be noted that said at least one light source is installed as part of the front or front/side portion of the vehicle. More in particular, said at least one light source is installed on an outer surface of an outside wing mirror of the vehicle.

When the outer surface of the outside wing mirror of the vehicle is already equipped with a parking light or indicator light, the light source is installed on the side of such parking lights or indicators.

Moreover, the light source is made with high brightness LEDs.

Further characteristics and advantages of the signalling device of the present invention shall become clearer from the following description of an embodiment given as an indication and not for limiting purposes with reference to the attached drawings.

### Brief description of the drawings

- figure 1 shows a schematic view of a detail of a safety signalling device made according to the present invention and installed on board of a vehicle;
- figure 2 shows a portion of a passenger compartment of an auto-vehicle at which the safety signalling device of the invention is installed;
- figure 3 shows a schematic view of an electric circuit for supplying power to and for connecting the signalling device of the present invention;
- figures 4 and 5 show respective schematic views of further embodiments of the electric circuit of figure 3;
- figure 6 shows a sequence of schematic images of a pedestrian crossing in which a pedestrian and a vehicle provided with the signalling device of the present invention converge.

### Detailed description

With reference to such figures, 1 wholly and schematically indicates a safety signalling device made in accordance with the present invention for a motor vehicle 3.

The signalling device 1 can be installed in an optional manner on all new vehicles, but it could also be applied to vehicles already in circulation.

The structural characteristics of the safety signalling device 1 of the present invention allow it to be installed on any motor vehicle equipped with a normal electric system, even through a post-sale installation. From this point of view the signalling device 1 can be considered as an accessory or as a spare part and can be supplied as a kit in packages in which all of its component parts can be assembled with one another and can be connected to the electric system of the vehicle with simple rapid fitting operations.

The electric system of the vehicle, not shown since it is of the conventional type, is connected to a power supply battery of 12V or of 24V which is schematically shown in the drawings only with its own positive voltage 13 and ground 11 terminations.

The signalling device 1 comprises at least one additional light source 2 fitted on the front part 4 or the front/side part of the vehicle 3. The actuation of the source 2 is slaved to a pressure on a pedal 18 of the brake of the vehicle, as shall become clearer from the following description.

More in particular, the light source 2 can be installed outside on a body portion of the vehicle 3.

For example, without this representing any limitation to the rights of the Applicant, the light source 2 can be installed at an outside wing mirror 5 of the vehicle 3.

For purposes of symmetry and of greater safety, it is preferable for at least two light sources 2 to be independently installed on respective front and side portions of the vehicle 3, for example on the front right side and front left side positions.

If it is desired to install a source 2 on the outer surface of an outside wing mirror 5, for example the right one, then for symmetry reasons it is advantageous for the second source 2 to be installed on the other left outside wing mirror 5 of the vehicle 3.

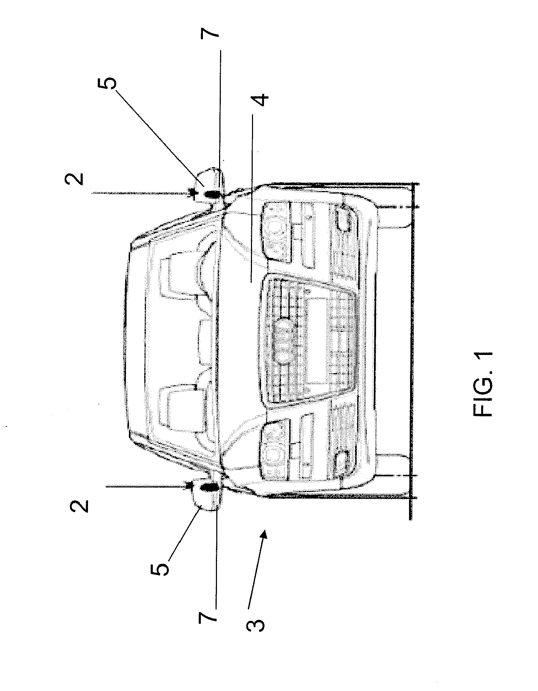

Some outside wing mirrors of modern motor vehicles are supplied with parking lights 7 or duplicated parking lights, as shown for example in figure 1. In other cases direction indicator lights are provided on the wing mirrors 5.

If such parking lights or direction indicator lights are already present on the vehicle 3, the light sources 2 of the signalling device 1 can be installed on the side of such parking lights 7 or direction indicators.

Moreover, the light sources 2 are preferably arranged near to the joint for adjusting the position of the wing mirror, near to the terminations of the electric power supply cables 19 of the motors for adjusting the wing mirrors or for supplying power to the direction indicators on the wing mirrors.

Advantageously, said at least one light source 2 is preferably made with high brightness LEDs. The light sources 2 arranged on the respective wing mirrors 5 of the right and left side of the vehicle 3 can both be made with high brightness LEDs or with other sources for emitting light like for example xenon lights.

The light source/s 2 have a suitable colour that is compatible with the rules of the highway code. It is not excluded for the colour to be different from those currently used on vehicles for indicating the parking lights, the indicators and/or the stop lights. In other words, in order to satisfy the purposes that the invention proposes, it may be suitable to adopt completely innovative colours so that, in addition to the position of the sources 2, even the colour or even the intermittent flashing can contribute to an immediate indication of the braking action being carried out.

Advantageously, the signalling device 1 also comprises an electric circuit 10 that connects the light source/s 2 to the voltage references of the power supply battery present on the vehicle 3.

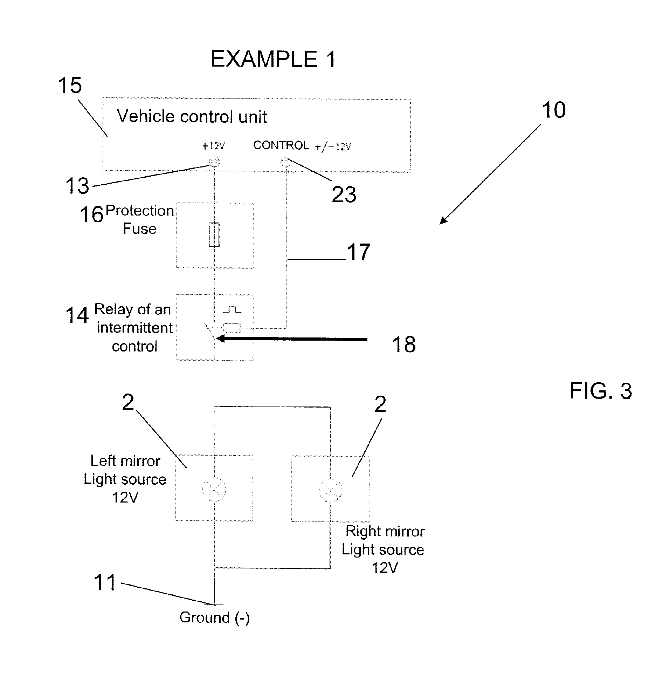

More in particular, with reference to figure 3, the electric circuit 10 can be made according to a first example or embodiment linked to a control unit 15 of the vehicle 3.

In this embodiment, two light sources 2 are connected to one another in parallel and are coupled to a ground voltage reference 11 and to a positive voltage reference 13, for example the 12V or 24V battery in direct current conventionally present and integral part of the electric system of the vehicle 3.

Between a terminal of the light sources 2 and the positive voltage reference 13 a relay 14 of an intermittent control is inserted. Such a relay is slaved to a command action made by the driver of the vehicle 3.

Between the relay 14 and the positive voltage reference 13 also an element 16 for protecting against overcurrent is optionally inserted in series, for example a fuse.

Advantageously, the electric circuit 10 can be installed inside the passenger compartment 8 of the vehicle 3 fitted into the existing electric system.

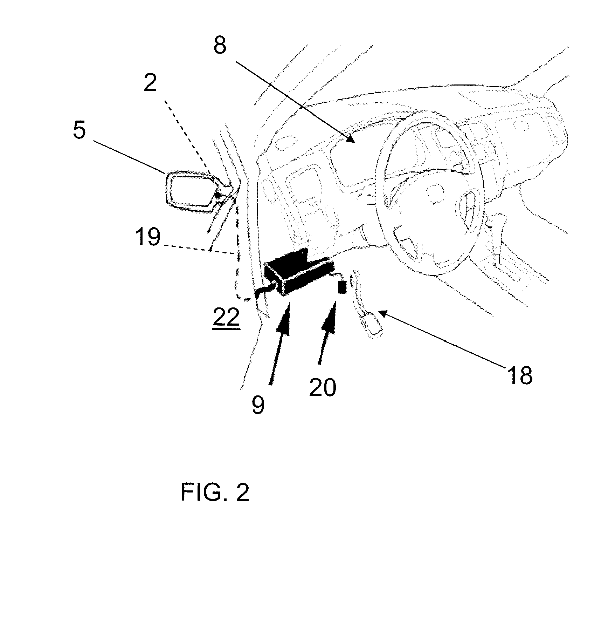

More in particular, in the passenger compartment 8 there is normally a fuse-holder box 9 that is positioned near to the pedals of the vehicle as shown in figure 2.

On all vehicles there is conventionally a command or switch for actuating the stop lights which is slaved to the brake pedal 18 not far from the fuse-holder box. Such a command coincides with the relay 14 in the set-up of the present invention.

Inside a door 22 that defines the passenger compartment 8 there are electrical connection cables 19 to supply power to the motors for adjusting and positioning the wing mirrors 5 or to the direction indicators of the wing mirrors.

Normally the fuse-holder box 9 also has supplementary doors available which make it possible to house a new fuse, for example like the fuse 16 of the diagram of figure 3.

Based upon the circuit diagram of figure 3, the signalling device 1 of the present invention simply requires an additional connection wire 17 between the relay and a terminal 23 of the control unit 15 on which there is a voltage reference alternatively positive and negative.

The relay 14 is slaved to the pressure applied on the brake pedal 18 by the driver of the vehicle 3, just like what occurs for actuating the rear stop lights. The connection 17 makes it possible to make the flashing of the light source/ s 2 intermittent following the pressure on the brake pedal due to the inversion in the polarity on the terminal 23.

The actuation of the sources 2 lasts for the entire time period in which pressure is exerted on the brake pedal.

Therefore, when there is a control unit 15 supervising the functions of the electric system of the vehicle 3 it is sufficient to provide the electric connection 17 in order to make the light sources 2 operative every time the brake pedal 18 is pressed by the driver of the vehicle.

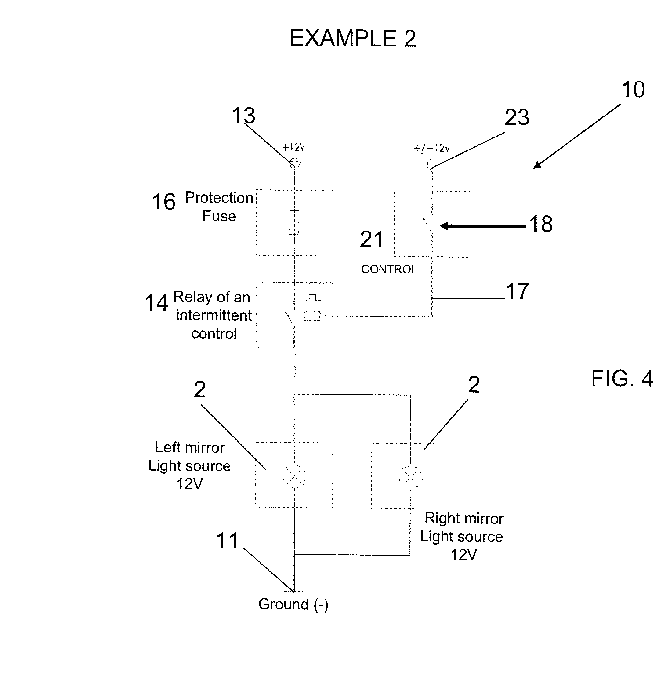

Figure 4 shows an embodiment that refers to cases in which there is no control unit 15 in the vehicle 3.

A switch 21 is therefore inserted on the connection 17 between the relay 14 and the alternating voltage terminal 23. This switch 21 is in turn slaved to the pressure on the brake pedal 18.

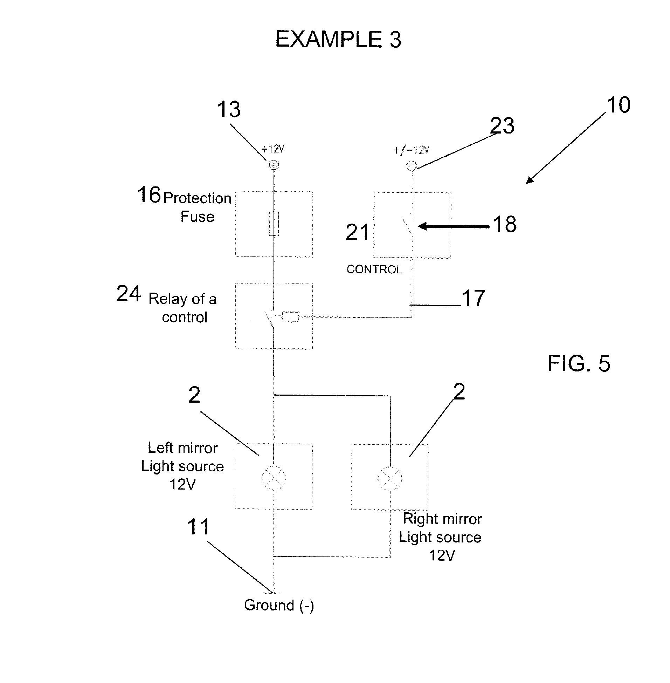

Figure 5 shows an alternative embodiment with respect to figure 4 in which the relay is indicated with reference numeral 24 being a command that is not intermittent. In this variant the sources 2 would be constantly on during the entire period in which pressure is exerted on the brake pedal 18.

The principle upon which the present invention is based is that of providing a pedestrian with the certainty that the driver of a vehicle that is coming has perceived his presence and has consequently started to brake.

The invention allows the pedestrian to rely on objective signals and does not leave any room for simple judgement for example on the position of the vehicle, lower on the front in the case of braking, or on the eye movement of the driver which expresses that he has become aware of the pedestrian.

Therefore, the signalling device of the present invention is part of the vehicle but it allows the pedestrian (or cyclist) to realize that the vehicle is slowing down or braking to allow him to cross. The visual signal that reaches the pedestrian has the same value as the direction indicators or rear stop lights, that is to say it allows information to be transmitted which makes it possible to understand the intention of the driver, who has seen the pedestrian and is braking.

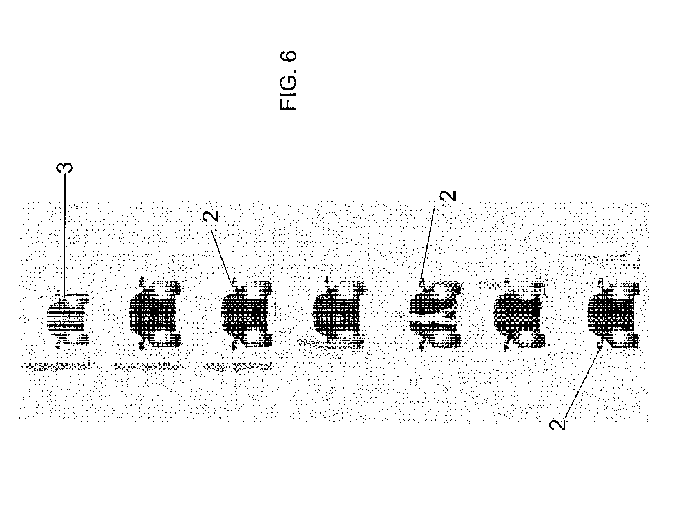

Figure 6 schematically illustrates this situation in the form of a sequence of images that show a pedestrian on the side of the road and an oncoming vehicle equipped with the device of the present invention. The pedestrian has the opportunity of understanding the behaviour of the driver of the vehicle since the signalling sources on the wing mirrors are actuated in conjunction with the pressure on the brake pedal. The pedestrian thus has the possibility of realizing that the driver has identified him and is braking so as to give him way to cross the road.

The invention is also effective in other situations of possible danger on the roads, for example near to roundabouts drivers of vehicles that have to access the roundabout must have the certainty that the driver already on it is slowing down.

Therefore, the device according to the invention makes it possible to understand from outside if a driver is braking in the same manner with which it can be easily identified that a driver is turning thanks to the direction indicators.

## Claims

1. Safety signalling device (1) for a motor vehicle (3) provided with an electric system connected to a power supply battery and with an actuation control (14) of the stop lights slaved to a pedal (18) of the brake of the vehicle, **characterised in that** it comprises:
- at least one signalling light source (2);
- an electric circuit (10) for supplying power and connecting between at least one light source (2) and a voltage reference (11, 13) of the electric system of said vehicle (3);
- an electric connection (17) between said actuation control (14) of the stop lights and a terminal (23) with alternating voltage reference to activate the intermittent actuation of said at least one light source (2) in conjunction with pressure on the brake pedal (18).

2. Signalling device (1) according to claim 1, **characterised in that** it comprises a switch (20) inserted on said electric connection (17) and in turn slaved to pressure on said brake pedal (18).

3. Signalling device (1) according to claim 1, **characterised in that** it comprises a fuse (14) between said relay and a voltage reference (13).

4. Signalling device (1) according to claim 1, **characterised in that** said at least one light source (2) is installed as part of the front (4) or front/side portion of the vehicle (3).

5. Signalling device (1) according to claim 1, **characterised in that** said at least one light source (2) is installed on an outer surface of an outside wing mirror (5) of the vehicle (3).

6. Signalling device (1) according to claim 5, wherein the outer surface of the outside wing mirror (5) of the vehicle is provided with a parking light (7) or a direction indicator light, **characterised in that** said at least one light source (2) is installed on the side of such parking lights (7) or of the direction indicators.

7. Signalling device (1) according to claim 1, **characterised in that** said light source (2) is made with high brightness LEDs.

8. Signalling device (1) according to claim 1, **characterised in that** the actuation of said at least one light source (2) is intermittent.

9. Signalling device (1) according to claim 1, **characterised in that** the actuation of said at least one light source (2) lasts for the entire duration of the period in which pressure is exerted on the brake pedal (18).

10. Signalling device (1) according to claim 3, **characterised in that** said fuse (16) is built into the fuse box present in the passenger compartment (8) of the vehicle (3).
